# EUROPEAN PATENT APPLICATION

(11) **EP 4 459 224 A1**
(43) Date of publication of application: **06.11.2024**
(21) Application number: 22913632.0
(22) Date of filing: 11.10.2022
(51) Int. Cl.: G01B 5/02

(54) **DISPLACEMENT TEST METHOD FOR LOCOMOTIVE COUPLING**

(30) Priority: 27.12.2021 CN 202111619131
(71) Applicant: CRRC Datong Co., Ltd., Pingcheng District Datong Shaanxi 037038 (CN)
(72) Inventor: CHEN, Jiyong, Datong, Shanxi 037038 (CN); ZHAO, Qinghai, Datong, Shanxi 037038 (CN); MI, Lizhu, Datong, Shanxi 037038 (CN)
(74) Representative: Cabinet Beau de Loménie
(86) International application number: PCT/CN2022/124490
(87) International publication number: WO 2023/124368

(57) **Abstract**

A displacement test method for a locomotive coupling (1), comprising the following steps: step S100, providing the coupling (1), and arranging a strain gauge (18) on flexible plates (2, 3) of the coupling (1); step S200, fixing one end of the coupling (1), applying an axial acting force to the other end of the coupling (1), so that the coupling (1) moves axially, and respectively acquiring the strain value of the strain gauge (18) and the axial displacement of the coupling (1) by means of a strain gauge (18) data acquisition device and a distance measurement device; S300, performing statistical analysis on the displacement and the corresponding strain value which are obtained in step S200 to obtain the mapping relationship between the displacement and the strain value; and step S400, mounting the coupling (1) in step S100 to a locomotive, obtaining a real-time strain value of the strain gauge (18) by means of the strain gauge (18) data acquisition device in a locomotive operation state, and obtaining a real-time displacement of the coupling (1) by using the mapping relationship obtained in step S300. The beneficial effect is that the real-time axial displacement of the coupling (1) can be obtained during the locomotive operation.

## Description

### CROSS REFERENCE

The present disclosure claims priority to Chinese Patent Application No. 202111619131.4, entitled " Method for Displacement Test of Coupling for Locomotive" filed on 27 December 2021, and the entire contents of which are incorporated herein by reference.

### TECHNICAL FIELD

The present disclosure belongs to the field of locomotive test, and particularly relates to a method for displacement test of a coupling for a locomotive.

### BACKGROUND

A direct-drive transmission device using a coupling with flexible plates, applied to a bogie of a high-power permanent magnet direct-drive electric locomotive, has the characteristics of large transmission torque, high efficiency and long maintenance period. At present, various performance tests of the coupling with flexible plates are all simulation tests on a test bench. In order to ensure that the displacement adaptation capability of the coupling with flexible plates satisfies operation requirements of the locomotive, it is needed to perform test and verification during actual operation of the locomotive. However, there is no related solution that the axial displacement test can be performed on the coupling during actual operation of the locomotive.

### SUMMARY

The present disclosure discloses a method for displacement test of a coupling for a locomotive, including the following steps:
step S100, providing a coupling, and providing strain gauges on flexible plates of the coupling;
step S200, fixing an end of the coupling, applying an axial acting force to another end of the coupling to cause an axial displacement of the coupling, and obtaining a strain value of a strain gauge and the axial displacement of the coupling through a strain gauge data acquisition device and a distance measurement device, respectively;
step S300, obtaining a mapping relationship between the displacement and the strain value by performing statistical analysis on the displacement and the corresponding strain value obtained in step S200; and
step S400, mounting the coupling in step S100 to the locomotive, obtaining a real-time strain value of the strain gauge through the strain gauge data acquisition device under an operation state of the locomotive, and obtaining a real-time displacement of the coupling by using the mapping relationship obtained in step S300.

In an example embodiment of the present disclosure, step S200 further includes providing a calibration device, where the calibration device is used to fix an end of the coupling and apply an axial acting force to another end of the coupling to cause an axial displacement of the coupling; where,
the calibration device includes a fixing portion, a moving portion and a force applying portion; the fixing portion, the moving portion and the force applying portion are sequentially arranged at intervals in an axial direction of the coupling; the fixing portion is used to fix an end of the coupling, the moving portion is used to fix another end of the coupling, the moving portion is able to move in the axial direction of the coupling, the force applying portion is located on a side of the moving portion away from the fixing portion, and the force applying portion is used to apply an axial acting force to an end of the coupling close to the moving portion.

In an example embodiment of the present disclosure, the calibration device further includes a supporting portion, the supporting portion is used to support the coupling, the supporting portion is located between the fixing portion and the moving portion, and the supporting portion is removed after two ends of the coupling are connected to the fixing portion and the moving portion respectively.

In an example embodiment of the present disclosure, the distance measurement device is a dial indicator, the dial indicator is mounted on an end of the fixing portion facing the coupling, and a probe of the dial indicator abuts against an end face of the coupling.

In an example embodiment of the present disclosure, a plurality of dial indicators are provided, and the plurality of dial indicators are uniformly distributed along a circumferential direction of an end face of the fixing portion.

In an example embodiment of the present disclosure, during performing statistical analysis on the obtained displacement and the corresponding strain value in step S300, a coordinate system is established by taking the strain value as a horizontal axis of the coordinate system and the displacement as a longitudinal axis of the coordinate system, a coordinate point is formed in the coordinate system by the obtained strain value and the displacement, and the mapping relationship between the strain value and the displacement is obtained by connecting and fitting various coordinate points to form an association curve of the strain value and the displacement.

In an example embodiment of the present disclosure,
the flexible plates include a first flexible plate and a second flexible plate, the first flexible plate is located on an end of the coupling connected to an output end of a driving motor, and the second flexible plate is located on an end of the coupling connected to a driving wheel; and
the strain gauges are provided on both the first flexible plate and the second flexible plate.

In an example embodiment of the present disclosure, the first flexible plate is provided with a first fixing portion, the first fixing portion is used to be connected to the output end of the driving motor, and the strain gauges are provided on both sides of the first fixing portion respectively.

In an example embodiment of the present disclosure, the second flexible plate is provided with a second fixing portion, the second fixing portion is used to be connected to the driving wheel, and the strain gauges are provided on both sides of the second fixing portion respectively.

In an example embodiment of the present disclosure, when the end of the coupling connected to the driving wheel is fixed in step S200, the first flexible plate of the coupling is removed; and after the first flexible plate is removed, an axial acting force is applied to the end of the coupling connected to the output end of the driving motor;
when the end of the coupling connected to the output end of the driving motor is fixed, the second flexible plate of the coupling is removed; and after the second flexible plate of the coupling is removed, an axial acting force is applied to the end of the coupling connected to the driving wheel.

The solution of the present disclosure has the following beneficial effects.

According to the solution of the present disclosure, a strain gauge is provided on a flexible plate of the coupling, an axial acting force is applied to the coupling to cause an axial displacement of the coupling, and a strain value of the strain gauge and the axial displacement of the coupling are obtained through a strain gauge data acquisition device and a distance measurement device respectively; after a plurality sets of data are obtained, a corresponding relationship between the strain value of the strain gauge and the axial displacement of the coupling is found; and finally, the coupling is mounted on the locomotive, the strain value of the flexible plate is measured under the operation state of the locomotive, and the axial displacement of the coupling is obtained according to the corresponding relationship between the strain value and the axial displacement. It is realized that, under the operation state of the locomotive, the required axial displacement of the coupling is obtained by measuring the strain data and converting it into the axial displacement of the coupling, which can be used to evaluate whether the dynamic characteristics of the coupling satisfy the design limit value.

The above and other objectives, features and advantages of the present disclosure will be more apparent from the following description of the preferred embodiments with reference to the accompanying drawings.

### BRIEF DESCRIPTION OF THE DRAWINGS

The above and other features and advantages of the present disclosure will become more apparent from the detailed description of the example embodiments with reference to the accompanying drawings.
FIG. 1 shows a flowchart of a method for displacement test of a coupling for a locomotive according to an embodiment of the present disclosure.
FIG. 2 is a schematic structural diagram when a calibration device is connected to a coupling according to an embodiment of the present disclosure.
FIG. 3 is a schematic structural diagram of a direct-drive transmission device according to an embodiment of the present disclosure.
FIG. 4 is a schematic structural diagram of a coupling according to an embodiment of the present disclosure.
FIG. 5 is a schematic structural diagram of a side of a second flexible plate facing a driving wheel according to an embodiment of the present disclosure.
FIG. 6 is a schematic structural diagram of a side of a second flexible plate away from a driving wheel according to an embodiment of the present disclosure.
FIG. 7 is a schematic structural diagram of a side of a first flexible plate facing a driven wheel according to an embodiment of the present disclosure.
FIG. 8 is a schematic structural diagram of a side of a first flexible plate away from a driven wheel according to an embodiment of the present disclosure.

The reference numerals are described as follows:
Coupling 1, First flexible plate 2, Second flexible plate 3, Driving wheel 4, Driven wheel 5, Driving motor 6, Hollow shaft 7, First fixing portion 8, Second fixing portion 9, Force transmission disk 10, Transmission disk 11, Fixing portion 12, Supporting portion 13, Moving portion 14, Force applying portion 15, Ball moving device 16, Dial indicator 17, and Strain gauge 18.

### DETAILED DESCRIPTION

Example embodiments will now be described more fully with reference to the accompanying drawings. Example embodiments, however, can be implemented in various forms and should not be construed as limited to the embodiments set forth herein; by contrast, these embodiments are provided so that the present disclosure will be thorough and complete, and will fully convey the concept of example embodiments to those skilled in the art.

Furthermore, the described features, structures, or characteristics may be combined in any suitable manner in one or more embodiments. In the following description, numerous specific details are provided to give a thorough understanding of embodiments of the present disclosure. Those skilled in the art will appreciate, however, that the technical solutions of the present disclosure may be practiced without one or more of the specific details, or by employing other methods, components, devices, steps, or the like. In other instances, commonly known methods, apparatuses, implementations, or operations are not shown or described in detail to avoid obscuring aspects of the present disclosure.

The present disclosure will be further described in detail below with reference to the accompanying drawings and specific embodiments. It should be noted that the technical features involved in the embodiments of the present disclosure described below may be combined with each other as long as they do not conflict with each other. The embodiments described below with reference to the drawings are exemplary and are intended to explain the present disclosure and are not to be construed as limitations on the present disclosure.

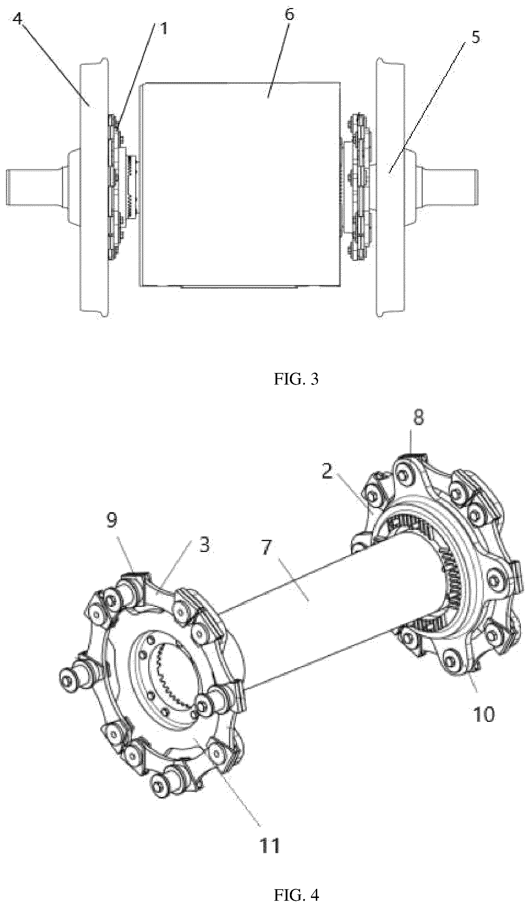

Referring to FIG. 3 and FIG. 4, the coupling 1 in the present disclosure is a part of a direct-drive transmission device. The direct-drive transmission device includes a wheel pair, a driving motor 6 and a coupling 1. Among them, the wheel pair includes a driving wheel 4, a driven wheel 5 and an axle connected between the driving wheel 4 and the driven wheel 5. The driving motor 6 has an output end. The coupling 1 includes a hollow shaft 7, a force transmission disk 10, flexible plates, a transmission disk 11, and a transmission pin.

Specifically, the hollow shaft 7 is provided with a shaft body, a first connection portion connected to the first end of the shaft body, and a second connection portion connected to the second end of the shaft body; the axle passes through the shaft body; the driving wheel is close to the second end of the shaft body; and the driven wheel is close to the first end of the shaft body. The flexible plate includes a first flexible plate 2 and a second flexible plate 3. The force transmission disk 10 and the first flexible plate 2 are sleeved outside the shaft body, and are closed to the first end. The first flexible plate 2 is connected to and provided between the force transmission disk 10 and the first connection portion. The force transmission disk 10 is fixedly connected to the output end. The transmission disk 11 is fixedly connected to the second connection portion. The second flexible plate 3 is fixedly connected to the transmission disk 11, and the second flexible plate 3 is connected to the driving wheel through a transmission pin. Power of the driving motor 6 is sequentially transmitted to the force transmission disk 10, the first flexible plate 2, the hollow shaft 7, the transmission disk 11, the second flexible plate 3, the transmission pin, the driving wheel and the driven wheel through the output end, thus driving the wheel pair to rotate.

By providing the first flexible plate 2 and the second flexible plate 3, the coupling 1 has a large elastic displacement capability and a non-wear characteristic. The transmission device not only can adapt to the requirements of displacement in all directions under the dynamic and static working conditions between the opposite wheel pairs of the driving motor 6, but also does not need lubrication and maintenance due to no wear. However, when the coupling 1 is mounted on the locomotive, it is not easy to directly measure the displacement of the coupling 1 due to the compact structure and more interference in all directions. Therefore, the present disclosure provides a method for displacement test of the coupling 1.

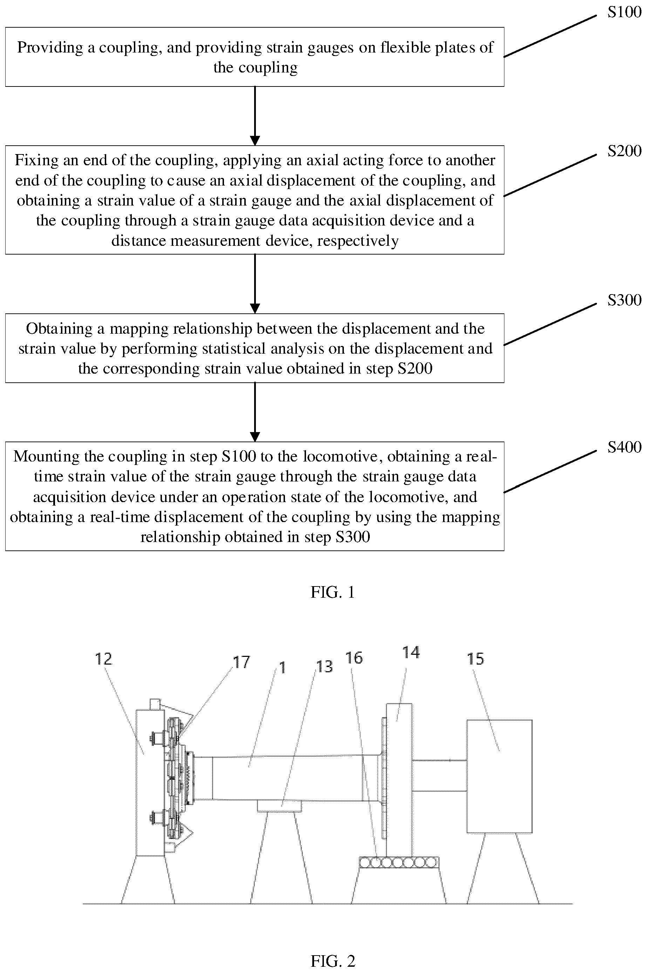

Referring to FIG. 1, the method for displacement test of a coupling for a locomotive provided by an embodiment of the present disclosure includes the following steps.

In step S100, a coupling 1 is provided, and a strain gauge 18 is provided on a flexible plate of the coupling 1.

In step S200, one end of the coupling 1 is fixed, an axial acting force is applied to the other end of the coupling 1 to cause an axial displacement of the coupling 1, and a strain value of the strain gauge 18 and the axial displacement of the coupling 1 are obtained through a strain gauge 18 data acquisition device and a distance measurement device respectively.

In step S300, a mapping process is performed on the displacement and the corresponding strain value obtained in step S200 to obtain a corresponding relationship between the displacement and the strain value.

In step S400, the coupling in step S100 is mounted to the locomotive, a real-time strain value of the strain gauge is obtained through the strain gauge data acquisition device under an operation state of the locomotive, and a real-time displacement of the coupling is obtained by using the mapping relationship obtained in step S300.

In this way, a strain gauge 18 is provided on a flexible plate of the coupling 1, an axial acting force is applied to the coupling 1 to cause an axial displacement of the coupling 1, and a strain value of the strain gauge 18 and the axial displacement of the coupling 1 are obtained through a strain gauge 18 data acquisition device and a distance measurement device respectively; after a plurality sets of data are obtained, a mapping relationship between the strain value of the strain gauge and the axial displacement of the coupling is found; and finally, the coupling 1 is mounted on the locomotive, the strain value of the flexible plate is measured under the operation state of the locomotive, the axial displacement of the coupling 1 is obtained according to the mapping relationship between the strain value and the axial displacement, and the required displacement data is indirectly obtained. It is realized that, under the operation state of the locomotive, the trouble of direct test of the axial displacement of the coupling 1 is avoided by measuring the strain data and converting it into the axial displacement of the coupling 1.

The strain gauge 18 is an element composed of a sensitive grid or the like and used for measuring the strain. The strain gauge 18 is firmly adhered to the flexible plate when in use. A strain occurs when the flexible plate is subjected to a force, and the sensitive grid is deformed to cause a change of its resistance. The resistance of the sensitive grid is measured through the strain gauge data acquisition device, and is converted into a strain value. There are various types of the strain gauge 18, commonly including a wire-type resistance strain gauge 18 and a foil-type resistance strain gauge 18. In the embodiments of the present disclosure, the foil-type resistance strain gauge 18 is used.

Furthermore, referring to FIG. 2, in step S200, it is further included that a calibration device is provided. The calibration device is used to fix one end of the coupling 1 and apply an axial acting force to the other end of the coupling 1 to cause an axial displacement of the coupling 1.

Specifically, the calibration device includes a fixing portion 12, a moving portion 14 and a force applying portion 15. The fixing portion 12 is used to fix an end of the coupling 1. The moving portion 14 is used to fix the other end of the coupling 1, and the moving portion 14 can move in the axial direction of the coupling 1. The force applying portion 15 is located on the side of the moving portion 14 away from the fixing portion 12, and the force applying portion 15 is used to apply an axial acting force to the end of the coupling 1 close to the moving portion 14 to cause a deformation displacement of the coupling 1 in its own axial direction, which is mainly caused by the flexibility of the flexible plate. At this time, the flexible plate deforms, and the strain value of the strain gauge 18 can be acquired through the strain gauge 18 data acquisition device. Then, the axial displacement of the coupling 1 is measured through the distance measurement device, so that the strain value can be associated with the displacement, and the displacement can be obtained through the strain value.

In the embodiments of the present disclosure, the fixing portion 12, the moving portion 14 and the force applying portion 15 are arranged at intervals in the axial direction of the coupling 1. When the fixing portion 12 is fixedly connected to an end of the coupling 1, the fixing portion 12 is fixedly connected to the flexible plate of the coupling 1. When the moving portion 14 is connected to the other end of the coupling 1, the moving portion 14 is connected to the hollow shaft 7 end of the coupling 1. The connection mode is not limited to clamping, screwing, or the like.

In addition, in order to facilitate placement of the coupling 1, the calibration device may further include a supporting portion 13. The supporting portion 13 is provided between the fixing portion 12 and the moving portion 14. The coupling 1 may be placed on the supporting portion 13 firstly; after the coupling 1 is placed stably, the fixing portion 12 and the moving portion 14 may be connected to either end of the coupling 1 in sequence. After the connection is completed, the supporting portion 13 may be removed.

The force applying portion 15 is used to apply an axial acting force to the coupling 1 to cause a deformation displacement of the coupling 1. The direction for applying the axial acting force may be facing the fixing portion 12 or away from the fixing portion 12, so as to apply an axial pressing or pulling force to the coupling 1 to cause a corresponding axial deformation and displacement of the coupling 1. The force applying portion 15 may be a telescopic mechanism. The telescopic direction of the telescopic mechanism extends in the axial direction of the coupling 1, and a telescopic portion of the telescopic mechanism is connected to the hollow shaft 7 end of the coupling 1.

After an end of the coupling 1 is fixed by the moving portion 14, the moving portion 14 plays a supporting role on the coupling 1 in the movement. After the force applying portion 15 applies an axial acting force to the coupling 1 to cause a deformation displacement of the coupling 1, the moving portion 14 supports the coupling 1 to move. The bottom of the moving portion 14 may be provided on a ball moving device 16. The ball moving device 16 may include a seat body, and a plurality of balls are laid in the seat body in the axial direction of the coupling 1. The bottom of the moving portion 14 is in contact with the balls, so that the moving portion 14 may move in the axial direction with a small resistance, without effect on the axial deformation and displacement of the coupling 1. Of course, the bottom of the moving portion 14 may also be provided in the form of a slideway or the like, for the moving portion 14 to move in the axial direction.

For example, referring to FIG. 2, the distance measurement device may be provided on the fixing portion 12, and may be a dial indicator 17 having a division value of 0.01 mm. The dial indicator 17 is mounted on an end of the fixing portion 12 facing the coupling 1, and a probe of the dial indicator 17 abuts against an end face of the coupling 1. When the deformation displacement of the coupling 1 occurs, the displacement of the coupling 1 may be measured by the dial indicator 17, and the measurement accuracy may be ensured. Of course, the distance measurement device may also adopt a clock gauge, a distance measurement sensor, or the like.

Furthermore, in order to improve the test accuracy, a plurality of dial indicators 17 may be provided. The plurality of dial indicators 17 are uniformly distributed along the circumferential direction of the end face of the fixing portion 12. After the values of various dial indicators 17 are measured, the average value of these values is taken as the displacement of the coupling 1. In the embodiments of the present disclosure, three dial indicators 17 re provided.

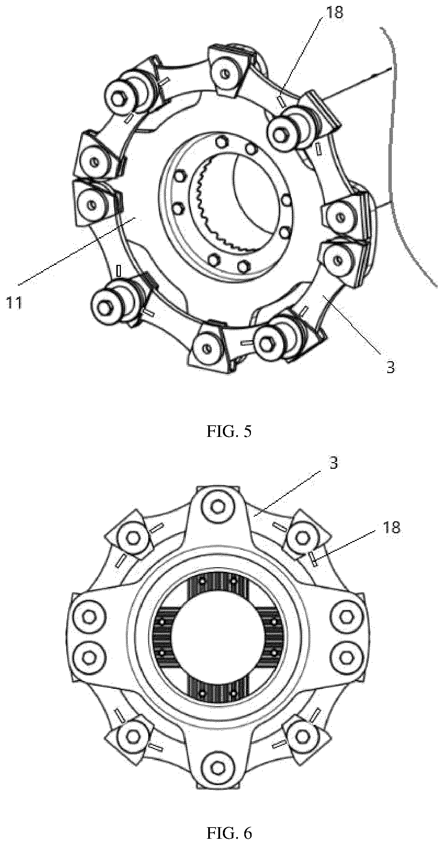

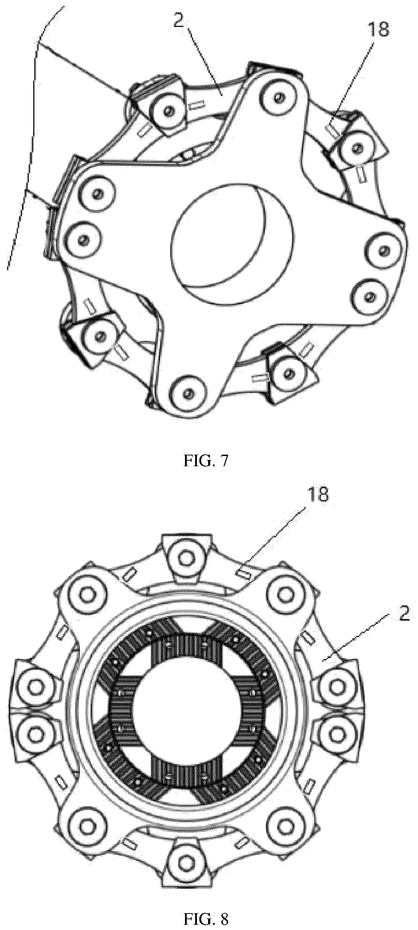

For example, referring to FIG. 5 to FIG. 8, when providing the strain gauge, strain gauges 18 are provided on both the first flexible plate 2 and the second flexible plate 3. When strain measurement is performed on the first flexible plate 2 and the second flexible plate 3, it should be performed respectively, and the measurement result is more accurate. In other words, when the end of the coupling 1 connected to the driving wheel 4 is fixed, the first flexible plate 2 of the coupling 1 is removed; and after the first flexible plate 2 is removed, an axial acting force is applied to the end of the coupling 1 connected to the output end of the driving motor 6, so as to obtain the relationship between the strain of the second flexible plate 3 and the displacement of the coupling 1. When the end of the coupling 1 connected to the output end of the driving motor 6 is fixed, the second flexible plate 3 of the coupling 1 is removed; and after the second flexible plate 3 is removed, an axial acting force is applied to the end of the coupling 1 connected to the driving wheel 4, so as to obtain the relationship between the strain of the first flexible plate 2 and the displacement of the coupling 1.

Furthermore, the first flexible plate 2 is provided with a first fixing portion 8, the first fixing portion 8 is used to be connected to the output end of the driving motor 6, and strain gauges 18 are provided on both sides of the first fixing portion 8 respectively. Due to the circular shape of the first flexible plate 2, the quantity of the first fixing portion 8 connected to the output end of the driving motor 6 is provided as four. In this way, four sets of (i.e., eight) strain gauges 18 are provided on both the left side and the right side of the first flexible plate 2 respectively. The measurement result may be more accurate by taking the average value of the measured results, thus reducing the error. The strain gauge 18 is provided at the first fixing portion 8 where the coupling 1 and the driving motor 6 are connected, therefore, when deformation occurs, the deformation here is larger, and the variation range of the measured strain values is larger and more accurate.

The second flexible plate 3 is provided with a second fixing portion 9, the second fixing portion 9 is used to be connected to the driving wheel 4, and strain gauges 18 are provided on both sides of the second fixing portion 9 respectively. Due to the circular shape of the second flexible plate 3, the quantity of the second fixing portion 9 connected to the driving wheel 4 is provided as four. In this way, four sets of (i.e., eight) strain gauges 18 are provided on both the left side and the right side of the second flexible plate 3 respectively. The measurement result may be more accurate by taking the average value of the measured results, thus reducing the error. The strain gauge 18 is provided at the second fixing portion 9 where the coupling 1 and the driving wheel 4 are connected, therefore, when deformation occurs, the deformation here is larger, and the variation range of the measured strain values is larger and more accurate.

During testing, the strain gauges 18 form strain bridges, eight sets of strain bridges are provided on the first flexible plate 2 and the second flexible plate 3, two adjacent strain gauges 18 form a set of strain bridge, and there are sixteen sets of strain bridges in total. Power supply and signal output of each strain bridge is performed through a collector ring. Considering the factors such as limitations on the passing number of the collector ring, working symmetry of the flexible plates, and occasional faults in strain bridges data, it should be ensured that data of at least three sets of strain bridges on each of the first flexible plate 2 and the second flexible plate 3 is valid.

For example, when statistical analysis is performed on the strain value and displacement obtained in step S300, a coordinate system may be established by taking the strain value as the horizontal axis of the coordinate system and the displacement as the longitudinal axis of the coordinate system. A coordinate point is formed in the coordinate system by the obtained strain value and the displacement. The mapping relationship between the strain value and the displacement may be obtained by connecting and fitting the various coordinate points to form an association curve of the strain value and the displacement. Therefore, after the coupling 1 is mounted on the locomotive, under the operation state of the locomotive, the real-time displacement of the coupling 1 is obtained by using the obtained real-time strain value of the strain gauge 18 and the mapping relationship between the strain value and the displacement. In the embodiments of the present disclosure, the strain gauge 18 data acquisition device may be connected to a computer, the strain value data obtained by the strain gauge 18 data acquisition device is input into the computer, and the corresponding displacement is synchronously input, so that the association curve of the strain value and the displacement may fitted by the computer, and the mapping relationship between the strain value and the displacement may be obtained. In this way, the axial displacement of the coupling 1 may be obtained in real time when the locomotive is in operation.

In addition, the terms "first" and "second" are used for descriptive purposes only and cannot be understood as indicating or implying the relative importance or implicitly indicating the number of indicated technical features. Thus, the features defined with "first" and "second" may explicitly or implicitly include one or more of the features. In the description of the present disclosure, "a plurality of" means two or more, unless otherwise specifically defined.

In the present disclosure, unless otherwise specified and defined, terms such as "assembly" and "connection" should be understood in a broad sense; for example, it may be a fixed connection, a detachable connection, or an integration as a whole; it may be a mechanical connection or an electrical connection; it may be a direct connection or an indirect connection by using an intermediate medium; and, it may be an inner communication between two elements or an interaction relationship between two elements. Those of ordinary skill in the art can understand the specific meanings of the above terms in the present disclosure according to specific situations.

In the description of this specification, the description of reference terms such as "some embodiments", "example embodiments", or the like, means that the specific features, structures, materials, or features described in combination with this embodiment or example are included in at least one embodiment or example of the present disclosure. In the specification, the illustrative expressions of the above terms do not necessarily refer to the same embodiments or examples. Moreover, the described specific features, structures, materials, or features can be combined in an appropriate manner in any one or more than one embodiment or example. In addition, those skilled in the art may combine and compose the different embodiments or examples described in this specification, as well as the features of different embodiments or examples, without conflicting with each other.

It should be understood that the present disclosure does not limit the application thereof to the detailed structure and arrangement of the components set forth in this specification. The present disclosure can have other embodiments, and can be implemented and executed in a variety of ways. The foregoing variations and modifications fall within the scope of the present disclosure. It should be understood that the present disclosure disclosed and defined in this specification extends to all alternative combinations of two or more separate features mentioned or evident in the text and/or drawings. All of these different combinations constitute a plurality of alternative aspects of the present disclosure. The embodiments described in this specification illustrate the best modes known for implementing the present disclosure, and will enable those skilled in the art to utilize the present disclosure.

## Claims

1. A method for displacement test of a coupling for a locomotive, comprising following steps:
step S100, providing a coupling, and providing strain gauges on flexible plates of the coupling;
step S200, fixing an end of the coupling, applying an axial acting force to another end of the coupling to cause an axial displacement of the coupling, and obtaining a strain value of a strain gauge and the axial displacement of the coupling through a strain gauge data acquisition device and a distance measurement device, respectively;
step S300, obtaining a mapping relationship between the displacement and the strain value by performing statistical analysis on the displacement and the corresponding strain value obtained in step S200; and
step S400, mounting the coupling in step S100 to the locomotive, obtaining a real-time strain value of the strain gauge through the strain gauge data acquisition device under an operation state of the locomotive, and obtaining a real-time displacement of the coupling by using the mapping relationship obtained in step S300.

2. The method for displacement test of the coupling for the locomotive according to claim 1, wherein step S200 further comprises providing a calibration device, wherein the calibration device is used to fix an end of the coupling and apply an axial acting force to another end of the coupling to cause an axial displacement of the coupling; wherein,
the calibration device comprises a fixing portion, a moving portion and a force applying portion; the fixing portion, the moving portion and the force applying portion are sequentially arranged at intervals in an axial direction of the coupling; the fixing portion is used to fix an end of the coupling, the moving portion is used to fix another end of the coupling, the moving portion is able to move in the axial direction of the coupling, the force applying portion is located on a side of the moving portion away from the fixing portion, and the force applying portion is used to apply an axial acting force to an end of the coupling close to the moving portion.

3. The method for displacement test of the coupling for the locomotive according to claim 2, wherein the calibration device further comprises a supporting portion, the supporting portion is used to support the coupling, the supporting portion is located between the fixing portion and the moving portion, and the supporting portion is removed after two ends of the coupling are connected to the fixing portion and the moving portion respectively.

4. The method for displacement test of the coupling for the locomotive according to claim 3, wherein the distance measurement device is a dial indicator, the dial indicator is mounted on an end of the fixing portion facing the coupling, and a probe of the dial indicator abuts against an end face of the coupling.

5. The method for displacement test of the coupling for the locomotive according to claim 4, wherein a plurality of dial indicators are provided, and the plurality of dial indicators are uniformly distributed along a circumferential direction of an end face of the fixing portion.

6. The method for displacement test of the coupling for the locomotive according to claim 1, wherein during performing statistical analysis on the obtained displacement and the corresponding strain value in step S300, a coordinate system is established by taking the strain value as a horizontal axis of the coordinate system and the displacement as a longitudinal axis of the coordinate system, a coordinate point is formed in the coordinate system by the obtained strain value and the displacement, and the mapping relationship between the strain value and the displacement is obtained by connecting and fitting various coordinate points to form an association curve of the strain value and the displacement.

7. The method for displacement test of the coupling for the locomotive according to claim 1, wherein, the flexible plates comprise a first flexible plate and a second flexible plate, the first flexible plate is located on an end of the coupling connected to an output end of a driving motor, and the second flexible plate is located on an end of the coupling connected to a driving wheel; and
the strain gauges are provided on both the first flexible plate and the second flexible plate.

8. The method for displacement test of the coupling for the locomotive according to claim 7, wherein the first flexible plate is provided with a first fixing portion, the first fixing portion is used to be connected to the output end of the driving motor, and the strain gauges are provided on both sides of the first fixing portion respectively.

9. The method for displacement test of the coupling for the locomotive according to claim 7, wherein the second flexible plate is provided with a second fixing portion, the second fixing portion is used to be connected to the driving wheel, and the strain gauges are provided on both sides of the second fixing portion respectively.

10. The method for displacement test of the coupling for the locomotive according to claim 7, wherein, when the end of the coupling connected to the driving wheel is fixed in step S200, the first flexible plate of the coupling is removed; and after the first flexible plate is removed, an axial acting force is applied to the end of the coupling connected to the output end of the driving motor; and
when the end of the coupling connected to the output end of the driving motor is fixed, the second flexible plate of the coupling is removed; and after the second flexible plate of the coupling is removed, an axial acting force is applied to the end of the coupling connected to the driving wheel.
